# EUROPÄISCHE PATENTSCHRIFT

(11) **EP 2 598 905 B1**
(45) Veröffentlichungstag und Bekanntmachung des Hinweises auf die Patenterteilung: **31.08.2016**
(21) Anmeldenummer: 11724177.8
(22) Anmeldetag: 01.06.2011
(51) Int. Cl.: G01S 7/03, G01S 13/93

(54) **RADOM FÜR EINEN RADARSENSOR IN EINEM KRAFTFAHRZEUG UND ENTSPRECHENDER RADARSENSOR**
RADOME FOR A RADAR SENSOR IN A MOTOR VEHICLE AND CORRESPONDING RADAR SENSOR
RADÔME POUR UN CAPTEUR RADAR DANS UN VÉHICULE AUTOMOBILE ET CAPTEUR RADAR CORRESPONDANT

(30) Priorität: 28.07.2010 DE 102010038517
(43) Veröffentlichungstag der Anmeldung: 05.06.2013
(73) Patentinhaber: Robert Bosch GmbH, 70442 Stuttgart (DE)
(72) Erfinder: BINZER, Thomas, 70565 Stuttgart (DE); WALDSCHMIDT, Christian, 70197 Stuttgart (DE); HELLINGER, Raphael, 71299 Wimsheim (DE); HANSEN, Thomas, 31139 Hildesheim (DE)
(86) Internationale Anmeldenummer: PCT/EP2011/059115
(87) Internationale Veröffentlichungsnummer: WO 2012/013398

(56) Entgegenhaltungen:
- EP-A1- 1 471 598
- EP-A1- 2 017 645
- EP-A2- 0 884 799
- EP-A2- 1 049 192

## Beschreibung

### Stand der Technik

Die Erfindung betrifft ein Radom für einen Radarsensor in einem Kraftfahrzeug sowie einen entsprechenden Radarsensor.

Eine Verwendung von Fahrerassistenzsystemen, insbesondere Abstandswarn- oder Abstandshaltesysteme in Kraftfahrzeugen nimmt immer weiter zu. Im Falle von Abstandshaltesystemen auf der Basis von Radarsensoren werden Radoms für die Abdeckung des entsprechenden Radarsensors genutzt.

Aus der EP 2 151 888 A1 ist ein Radom für einen Radarsensor in einem Kraftfahrzeug bekannt geworden, dessen wenigstens eine Wand auf einer ersten Oberfläche mit wenigstens einer dreidimensionalen ersten Struktur versehen ist, wobei eine der ersten Oberfläche gegenüberliegende zweite Oberfläche wenigstens eine an die wenigstens eine erste Struktur derart angepasste zweite Struktur aufweist, dass der optische Weg für elektromagnetische Wellen an strukturaufweisenden wie auch strukturlosen Stellen der Wand im Wesentlichen gleich ist.

Derartige Radoms benötigen jedoch aufgrund der geforderten Eigenschaft, Radarstrahlen möglichst ungestört passieren zu lassen, viel Bauraum: Damit sich beispielsweise Antennen, die für die Abstrahlung der Radarstrahlen vorgesehen sind und ein entsprechendes Speisenetzwerk nicht gegenseitig beeinflussen, müssen diese beabstandet voneinander angeordnet werden.

Die Druckschrift EP 0 884 799 A2 offenbart ein Radom für einen Radarsensor mit einer Abdeckung, die über einer Radarantenne ein radarwellendurchlässiges Fenster und über einer integrierten Schaltung eine radarwellenabsorbierende Beschichtung aufweist.

Die Druckschrift EP 1 471 598 A1 offenbart eine Abdeckung mit Funkwellenabsorbern, welche über einem Funkwellenarray angeordnet ist.

Die Druckschrift EP 1 049 192 A1 offenbart eine Kommunikationsvorrichtung mit einer Antenne und einer metallischen Abdeckung, welche mit einem Fenster über den Antenne versehen ist.

### Offenbarung der Erfindung

Das in Anspruch 1 definierte Radom für einen Radarsensor in einem Kraftfahrzeug umfasst einen ersten Bereich, der durchlässig für zumindest eine bestimmte Art elektromagnetischer Wellen, insbesondere Radarwellen, ist, eine Abschirmung, welche einen zweiten Bereich des Radoms überdeckt, sodass der zweite Bereich undurchlässig für die bestimmte Art elektromagnetischer Wellen ist, und eine Trennwand, welche im Übergangsbereich zwischen dem ersten Bereich und dem zweiten Bereich angeordnet ist, dadurch gekennzeichnet, dass die Trennwand Aussparungen zur Durchführung von Leiterbahnen von dem ersten Bereich in den zweiten Bereich aufweist.
Der in Anspruch 5 definierte Radarsensor mit einem Radom gemäß einem der Ansprüche 1 bis 4 umfasst Mittel zur Erzeugung von elektromagnetischen Wellen, die im Bereich des zweiten Bereichs des Radoms angeordnet sind und/oder Mittel zur Abstrahlung von elektromagnetischen Wellen, die im Bereich des ersten Bereichs des Radoms angeordnet sind.

### Vorteile der Erfindung

Das in Anspruch 1 definierte Radom für einen Radarsensor sowie der in Anspruch 6 definierte Radarsensor mit einem Radom gemäß zumindest einem der Ansprüche 1 bis 5 weisen den Vorteil auf, dass insgesamt für einen Radarsensor mit Radom deutlich weniger Bauraum erforderlich ist, da die Mittel zur Erzeugung von elektromagnetischen Wellen, also beispielsweise integrierte Schaltkreise, etc. und Mittel zur Abstrahlung, also beispielsweise Hochfrequenz-Antennen, etc. nebeneinander, beispielsweise auf einer Oberfläche einer Leiterplatte, angeordnet werden können und zwar ohne negative Einflüsse auf eine Abstrahlung der entsprechenden elektromagnetischen Wellen und ohne Richtlinien zur elektromagnetischen Verträglichkeit zu verletzen.

Der Vorteil hierbei ist, dass damit beispielsweise Leiterbahnen für Antennen zur Abstrahlung der Radarstrahlen direkt auf einer Leiterplatte anordenbar und mit einem ebenfalls auf der Leiterplatte angeordneten Speisenetzwerk verbindbar sind, ohne dass zusätzliche Verdrahtungen oder Schaltungen für den Übergang der Leiterbahnen vom zweiten Bereich in den ersten Bereich erforderlich sind. Dies ermöglicht eine einfache und kostengünstige Herstellung eines Radarsensors mit Radom.

Gemäß einer weiteren vorteilhaften Weiterbildung der Erfindung sind der erste Bereich und der zweite Bereich benachbart, insbesondere direkt nebeneinander angeordnet. Der Vorteil hierbei ist, dass damit der Bauraum für einen Radarsensor mit Radom noch weiter reduziert wird und gleichzeitig die Flexibilität erhöht wird.

Gemäß einer weiteren vorteilhaften Weiterbildung der Erfindung weist die Abschirmung eine Dicke auf, die entsprechend einer gewünschten Unterdrückung von der bestimmten Art elektromagnetischer Wellen ausgebildet ist. Der Vorteil hierbei ist, dass damit in optimaler Weise die Abschirmung an die jeweils gewünschte Art von zu unterdrückenden elektromagnetischen Wellen angepasst werden kann, ohne gleichzeitig den Bauraum für das Radom unnötig zu vergrößern.

Gemäß einer weiteren vorteilhaften Weiterbildung der Erfindung umfasst das Radom, vorzugsweise die Abschirmung, Heizmittel. Der Vorteil dabei ist, dass damit auf einfache Weise Eis auf der Außenseite des Radoms abgetaut werden kann, ohne den Bauraum des Radoms vergrößern zu müssen.

Gemäß einer weiteren vorteilhaften Weiterbildung des Radarsensors der Erfindung sind die Mittel zur Erzeugung und die Mittel zur Abstrahlung auf einer gemeinsamen Seite einer Oberfläche einer Leiterplatte angeordnet. Der Vorteil hierbei ist, dass damit der benötigte Bauraum für den Radarsensor weiter reduziert wird und gleichzeitig die Herstellung des Radarsensors wesentlich vereinfacht wird.

Gemäß einer weiteren vorteilhaften Weiterbildung des Radarsensors umfassen die Mittel zur Erzeugung eine integrierte Schaltung, insbesondere eine monolithische integrierte Mikrowellenschaltung. Der Vorteil hierbei ist, dass damit auf einfache und kostengünstige Weise eine bestimmte Art einer elektromagnetischen Welle erzeugt werden kann.

Gemäß einer weiteren vorteilhaften Weiterbildung des Radarsensors umfassen die Mittel zur Abstrahlung Hochfrequenz-Antennen. Der Vorteil hierbei ist, dass damit auf einfache und kostengünstige Weise eine Abstrahlung der bestimmten eletromagnetischen Wellen ermöglicht wird.

Das Radom gemäß eines einem der Ansprüche 1 bis 5 kann im Wesentlichen quaderförmig ausgebildet sein und im Wesentlichen eine Grundfläche zwischen im Wesentlichen 50 x 50 mm bis 80 x 80 mm, vorzugsweise zwischen im Wesentlichen 60 x 60 bis 70 x 70 mm aufweisen. Gleiches gilt auch für eine Grundfläche eines Radarsensors gemäß dem Anspruch 5. Selbstverständlich können dabei die beiden Kanten jeweils unabhängig voneinander variiert werden. Sind der erste und zweite Bereich auf einer Seite einer Leiterplatte angeordnet, weisen diese ein Verhältnis zueinander zwischen im Wesentlichen 1 : 1,5 und 1 : 3, insbesondere von im Wesentlichen 1 : 2 auf. Die Dicke der Trennwand der Abschirmung für Radarstrahlen beträgt im Wesentlichen 0,5 - 2,5 mm, insbesondere 1 - 2mm. In der Beschreibung, insbesondere in den Ansprüchen umfassen Radarstrahlen elektromagnetische Wellen mit einer Frequenz zwischen 20 und 100 GHz, insbesondere zwischen 23 und 80 GHz, vorzugsweise im Bereich von 24 GHz und / oder zwischen 76 - 81 GHz, insbesondere zwischen 76 und 77 GHz.

### Kurze Beschreibung der Zeichnungen

Ausführungsbeispiele der Erfindung sind in der Zeichnung dargestellt und in der nachfolgenden Beschreibung näher erläutert. Es zeigen:
Fig. 1: Einen Radarsensor mit Radom gemäß einer ersten Ausführungsform der vorliegenden Erfindung in perspektivischer Darstellung.
Fig. 2: Einen Ausschnitt aus Fig. 1 von einem Radarsensor mit Radom gemäß der ersten Ausführungsform der vorliegenden Erfindung.

### Ausführungsformen der Erfindung

In den Figuren bezeichnen gleiche Bezugszeichen dieselben bzw. funktionsgleiche Elemente, sofern nichts anderes beschrieben ist.

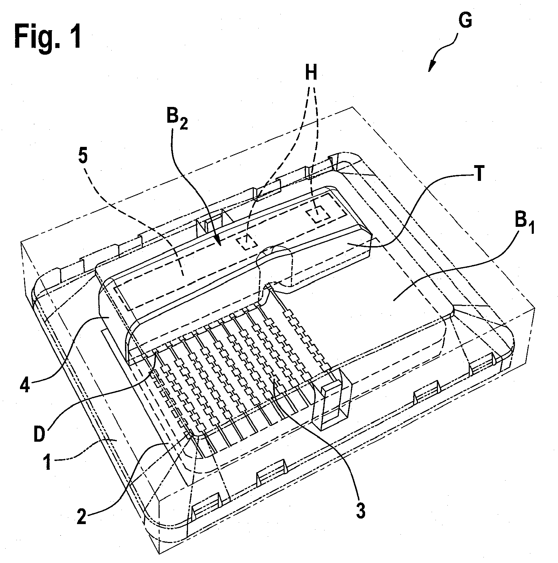

Fig. 1 zeigt einen Radarsensor mit Radom gemäß einer ersten Ausführungsform der vorliegenden Erfindung in perspektivischer Darstellung.

In Fig. 1 ist in perspektivischer Darstellung ein Radarsensor G mit einem Radom 1 gezeigt. Im Radarsensor G ist eine ebene Leiterplatte 2 angeordnet. Das Radom 1 umfasst zwei Bereiche B₁, B₂ und unterteilt die Leiterplatte 2 auf ihrer Oberfläche in die zwei Bereiche B₁, B₂ die im Wesentlichen nebeneinander angeordnet sind. Der erste Bereich B₁ umfasst ca. 2/3 der Oberfläche der Leiterplatte 2. Der zweite Bereich B₂ umfasst ca. 1/3 der Oberfläche der Leiterplatte 2. Auf der Leiterplatte 2 verlaufen jeweils parallel zueinander mehrere Leiterbahnen, die als Hochfrequenz-Antennen 3 ausgebildet sind. Dabei erstrecken sich die parallel verlaufenden Hochfrequenz-Antennen 3 auch in den zweiten Bereich B₂ des Radoms 1 hinein. Der zweite Bereich B₂ ist dabei von einer Abschirmung 4 des Radoms 1 überdeckt, die Aussparungen D aufweist, zur Durchführung der Leiterbahnen der Hochfrequenz-Antennen 3 von dem ersten Bereich B₁ in den zweiten Bereich B₂. Zur Stabilisierung des beispielsweise mittels Spritzgußtechnik hergestellten Radoms 1 ist eine Trennwand T angeordnet im Übergangsbereich zwischen den beiden Bereichen B₁ und B₂. Die Trennwand T kann bei ausreichender Stabilität des Radoms 1 oder der Abschirmung 4 auch weggelassen werden. Im Bereich B₂ auf der Leiterplatte 2 sind weiter integrierte Schaltkreise 5 angeordnet, die zur Erzeugung von Radarstrahlen dienen. Diese sind über Leiterbahnen mit den Hochfrequenz-Antennen 3 verbunden. Beim Betrieb des Radarsensors G werden die Radarstrahlen dann mittels der Hochfrequenz-Antennen 3 im Bereich B₁ abgestrahlt, dringen jedoch aufgrund der undurchlässigen Abschirmung 4 nicht in den Bereich B₂ ein und werden auch dort nicht abgestrahlt.

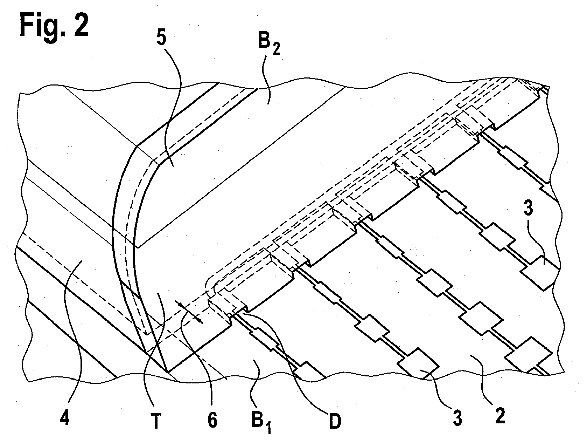

Fig. 2 zeigt einen Ausschnitt aus Fig. 1 von einem Radarsensor mit Radom gemäß der ersten Ausführungsform der vorliegenden Erfindung.

In Fig. 2 wird ein Ausschnitt der Fig. 1 im Übergang zwischen dem ersten Bereich B₁ und dem zweiten Bereich B₂ gezeigt. Zu sehen sind die Hochfrequenz-Antennen 3, die parallel zueinander vom ersten Bereich B₁ in den zweiten Bereich B₂ auf der Leiterplatte 2 verlaufen. Im Bereich B₂ ist die Abschirmung 4 angeordnet, die Aussparungen D aufweist, so dass die Abschirmung 4 im zweiten Bereich B₂ die Leiterbahnen der Hochfrequenz-Antennen 3 vollständig umgibt und so im zweiten Bereich B₂ die integrierten Schaltkreise 5 von der im Bereich B₁ von den Hochfrequenz-Antennen 3 emittierten Radarstrahlung abschirmt. Weiter ist die Dicke 6 der Abschirmung 4 eingezeichnet. Die Dicke 6 wird dabei parallel zur Oberfläche der Leiterplatte 2 in Richtung der parallel verlaufenden Hochfrequenz-Antennen 3 gemessen und erstreckt sich, wie auch die Abschirmung 4 insgesamt, senkrecht zur Oberfläche der Leiterplatte 2. Die Dicke 6 wird dabei so angepasst, dass von den Hochfrequenz-Antennen 3 emittierte Radarstrahlung nicht oder nur zu unwesentlichen Teilen in den Bereich B₂ eindringen kann.

Zusammenfassend weist die Erfindung die Vorteile auf, dass diese einfach und kostengünstig herstellbar ist und gleichzeitig der benötigte Bauraum für einen Radarsensor reduziert werden kann, ohne einen Verlust elektromagnetischer Verträglichkeit.

Obwohl die vorliegende Erfindung vorstehend anhand bevorzugter Ausführungsbeispiele beschrieben wurde, ist sie nicht darauf beschränkt sondern auf vielfältige Weise modifizierbar.

## Patentansprüche

1. Radom (1) für einen Radarsensor in einem Kraftfahrzeug, umfassend:
einen ersten Bereich (B₁), der durchlässig für zumindest eine bestimmte Art elektromagnetischer Wellen ist;
eine Abschirmung (4), welche einen zweiten Bereich (B₂) des Radoms (1) überdeckt, sodass der zweite Bereich (B₂) undurchlässig für die bestimmte Art elektromagnetischer Wellen ist; und
eine Trennwand (T), welche im Übergangsbereich zwischen dem ersten Bereich (B₁) und dem zweiten Bereich (B₂) angeordnet ist,
**dadurch gekennzeichnet, dass**
die Trennwand (T) Aussparungen (D) zur Durchführung von Leiterbahnen von dem ersten Bereich (B₁) in den zweiten Bereich (B₂) aufweist.

2. Radom (1) gemäß Anspruch 1, wobei
der erste Bereich (B₁) und der zweite Bereich (B₂) benachbart, insbesondere direkt nebeneinander, angeordnet sind.

3. Radom (1) gemäß einem der Ansprüche 1 bis 2, wobei
die Abschirmung (4) eine Dicke (6) entsprechend einer gewünschten Unterdrückung von der bestimmten Art elektromagnetischer Wellen aufweist.

4. Random (1) gemäß einem der Ansprüche 1 bis 3, wobei
die Abschirmung (4) Heizmittel (H) umfasst.

5. Radarsensor (G) mit einem Radom (1) gemäß einem der Ansprüche 1 bis 4, umfassend
Mittel (5) zur Erzeugung von elektromagnetischen Wellen, die im Bereich des zweiten Bereichs (B₂) des Radoms (1) angeordnet sind und/oder Mittel (3) zur Abstrahlung von elektromagnetischen Wellen, die im Bereich des ersten Bereichs (B₁) des Radoms (1) angeordnet sind.

6. Radarsensor (G) gemäß Anspruch 5, wobei
die Mittel (5) zur Erzeugung und die Mittel (3) zur Abstrahlung auf einer gemeinsamen Seite einer Oberfläche einer Leiterplatte (2) angeordnet sind.

7. Radarsensor (G) gemäß einem der Ansprüche 5 und 6, wobei die Mittel (5) zur Erzeugung eine integrierte Schaltung umfassen.

8. Radarsensor (G) gemäß einem der Ansprüche 5 bis 7, wobei
die Mittel (3) zur Abstrahlung Hochfrequenz-Antennen umfassen.

9. Verwendung eines ersten und eines zweiten Bereichs (B₁**,** B₂) bei einem Radom (1) für einen Radarsensor (G) in einem Kraftfahrzeug, wobei der erste Bereich (B₁) durchlässig für eine bestimmte Art elektromagnetischer Wellen ist, der zweite Bereich (B₂) von einer Abschirmung (4) überdeckt wird, sodass der zweite Bereich (B₂) undurchlässig für die bestimmte Art elektromagnetischer Wellen ist, und eine Trennwand (T) im Übergangsbereich zwischen dem ersten Bereich (B₁) und dem zweiten Bereich (B₂) angeordnet ist, wobei vorzugsweise der erste und zweite Bereich (B₁, B₂) benachbart nebeneinander angeordnet sind,
**dadurch gekennzeichnet, dass**
die Trennwand (T) Aussparungen (D) zur Durchführung von Leiterbahnen von dem ersten Bereich (B₁) in den zweiten Bereich (B₂) aufweist.

## Claims

1. Radome (1) for a radar sensor in a motor vehicle, comprising:
a first region (B₁), which is permeable to at least one specific type of electromagnetic waves;
a shielding (4), which covers over a second region (B₂) of the radome (1), so that the second region (B₂) is impermeable to the specific type of electromagnetic waves; and
a separating wall (T), which is arranged in a transitional region between the first region (B₁) and
the second region (B₂),
**characterized in that**
the separating wall (T) has clearances (D) for feeding conductor tracks through from the first region (B₁) into the second region (B₂).

2. Radome (1) according to Claim 1,
the first region (B₁) and the second region (B₂) being arranged adjacently, in particular directly next to one another.

3. Radome (1) according to either of Claims 1 and 2, the shielding (4) having a thickness (6) corresponding to a desired suppression of the specific type of electromagnetic waves.

4. Radome (1) according to one of Claims 1 to 3,
the shielding (4) comprising heating means (H).

5. Radar sensor (G) with a radome (1) according to one of Claims 1 to 4, comprising
means (5) for generating electromagnetic waves, which are arranged in the region of the second region (B₂) of the radome (1), and/or means (3) for radiating electromagnetic waves, which are arranged in the region of the first region (B₁) of the radome (1).

6. Radar sensor (G) according to Claim 5,
the generating means (5) and the radiating means (3) being arranged on a common side of a surface of a printed circuit board (2).

7. Radar sensor (G) according to either of Claims 5 and 6,
the generating means (5) comprising an integrated circuit.

8. Radar sensor (G) according to one of Claims 5 to 7,
the radiating means (3) comprising high-frequency antennas.

9. Use of a first region (B₁) and a second region (B₂) on a radome (1) for a radar sensor (G) in a motor vehicle, the first region (B₁) being permeable to a specific type of electromagnetic waves, the second region (B₂) being covered by a shielding (4), so that the second region (B₂) is impermeable to the specific type of electromagnetic waves, and a separating wall (T) being arranged in the transitional region between the first region (B₁) and the second region (B₂), the first region (B₁) and the second region (B₂) preferably being arranged adjacently next to one another, **characterized in that**
the separating wall (T) has clearances (D) for feeding conductor tracks through from the first region (B₁) into the second region (B₂).

## Revendications

1. Radôme (1) pour un capteur radar dans un véhicule automobile, comprenant :
une première zone (B₁) qui est transparente pour au moins un type défini d'ondes électromagnétiques ;
un blindage (4) qui recouvre une deuxième zone (B₂) du radôme (1) de telle sorte que la deuxième zone (B₂) est opaque pour le type défini d'ondes électromagnétiques ; et
une paroi de séparation (T) qui est disposée dans la zone de transition entre la première zone (B₁) et la deuxième zone (B₂),
**caractérisé en ce que**
la paroi de séparation (T) possède des cavités (D) servant au passage de pistes conductrices de la première zone (B₁) dans la deuxième zone (B₂).

2. Radôme (1) selon la revendication 1, la première zone (B₁) et la deuxième zone (B₂) étant voisines, notamment disposées directement l'une à côté de l'autre.

3. Radôme (1) selon l'une des revendications 1 à 2, le blindage (4) possédant une épaisseur (6) correspondant à la suppression souhaitée du type défini d'ondes électromagnétiques.

4. Radôme (1) selon l'une des revendications 1 à 3, le blindage (4) comprenant des moyens de chauffage (H).

5. Capteur radar (G) équipé d'un radôme (1) selon l'une des revendications 1 à 4, comprenant des moyens (5) de génération d'ondes électromagnétiques, lesquels sont disposés dans la zone de la deuxième zone (B₂) du radôme (1), et/ou des moyens (3) d'émission d'ondes électromagnétiques, lesquelles sont disposées dans la zone de la première zone (B₁) du radôme (1).

6. Capteur radar (G) selon la revendication 5, les moyens (5) de génération et les moyens (3) d'émission étant disposés sur un côté commun d'une surface d'un circuit imprimé (2).

7. Capteur radar (G) selon l'une des revendications 5 et 6, les moyens (5) de génération comprenant un circuit intégré.

8. Capteur radar (G) selon l'une des revendications 5 à 7, les moyens (3) d'émission comprenant des antennes à haute fréquence.

9. Utilisation d'une première et d'une deuxième zone (B₁, B₂) avec un radôme (1) pour un capteur radar (G) dans un véhicule automobile, la première zone (B₁) étant transparente pour un type défini d'ondes électromagnétiques, la deuxième zone (B₂) étant recouverte d'un blindage (4) de telle sorte que la deuxième zone (B₂) est opaque pour le type défini d'ondes électromagnétiques, et une paroi de séparation (T) est disposée dans la zone de transition entre la première zone (B₁) et la deuxième zone (B₂), la première et la deuxième zone (B₁, B₂) étant de préférence disposées voisines l'une de l'autre, **caractérisée en ce que** la paroi de séparation (T) possède des cavités (D) servant au passage de pistes conductrices de la première zone (B₁) dans la deuxième zone (B₂).
